# EUROPEAN PATENT SPECIFICATION

(11) **EP 3 857 133 B1**
(45) Date of publication and mention of the grant of the patent: **25.09.2024**
(21) Application number: 19802060.4
(22) Date of filing: 24.09.2019
(51) Int. Cl.: F24F 7/06, F24F 12/00, F28F 3/00, F24F 7/08

(54) **VENTILATION SYSTEM WITH HEAT RECOVERY**
LÜFTUNGSANLAGE MIT WÄRMERÜCKGEWINNUNG
SYSTÈME DE VENTILATION AVEC RÉCUPÉRATION DE CHALEUR

(30) Priority: 27.09.2018 DK PA201870630
(43) Date of publication of application: 04.08.2021
(73) Proprietor: AIRbyNATURE ApS, 9220 Aalborg Øst (DK)
(72) Inventor: PLOUGMAN, Heine, 9210 Aalborg SØ (DK)
(74) Representative: Zacco Denmark A/S
(86) International application number: PCT/DK2019/050284
(87) International publication number: WO 2020/064073

(56) References cited:
- EP-A1- 2 568 208
- EP-A2- 1 788 317
- WO-A2-2008/102227
- CN-Y- 2 742 367
- JP-A- H02 171 543
- US-A1- 2005 287 946

## Description

The present invention relates to equipment for ventilation of buildings, which equipment according to the preamble of claim 1, comprises at least one and preferably at least two heat exchange units, which exchange energy between the intake air and the exhaust air, respectively, from the building, which equipment is controlled electronically and centrally. Such equipment is used for improving the indoor climate in buildings. Poor indoor climate can for example be the result of too high air humidity, to high CO2 content, too high radon content as well as too high content of other gases and polluting particles. Moreover, pollen and fungus spores can also cause poor indoor climate. Therefore, frequent airing is recommended, which has traditionally been done by opening some doors and windows for a period of time, whereby some of the indoor air is replaced by outdoor air. A number of disadvantages are associated with this type of airing. When the outdoor temperature deviates from the indoor temperature, loss of heat or cold will take place. If their air humidity is high outside, it will often not be possible to reduce the indoor air humidity, rather the opposite. Furthermore, when there is a wind, draught may occur, which can lead to discomfort and slamming doors and windows.

Instead it is possible to use ventilators, whereby a loss of heat or cold will still also occur when the outdoor temperature deviates from the indoor temperature.

A solution to the problem of poor indoor climate has been suggested by Genvex, which manufactures and sells ventilation systems with air-to-air heat exchangers. A Genvex system is expensive to buy and expensive and complicated to mount, especially as extensive piping is required. When in use, the system has a relatively high energy consumption and frequent cleaning is required to avoid, inter alia, dust and dirt in the pipes, where for example mould fungus can grow, which will then lead to poor indoor climate.

Document EP 1 788 317 A2 discloses a system according to the preamble of claim 1, in which an indoor air cleaning unit mounted at a wall separating two rooms of a building operates in association with other air conditioning devices such as a heat recovery ventilator.

The object of the invention is to provide improvements relative to known systems, so that efficient ventilation of a building can be secured in an easier and cheaper way.

According to the characterizing part of claim 1, the equipment for ventilation of buildings is characterized in that the equipment comprises at least one indoor unit, which includes a first flow channel with an associated blower and a second flow channel with an associated blower, wherein the first blower blows the air in and the second blower extracts the air, which two blowers can be controlled separately. Such unit secures in a simple manner ventilation of separate rooms in a building and is at the at the same time suitable for securing air transport through for example walking areas, where one or more doors are closed. It is moreover a big advantage that it is not necessary to use pipes in the building, whereby the installation of the ventilation system can be done at very low costs and quickly.

According to a preferred embodiment of the invention, the equipment is characterized in that the indoor unit is provided with coverings, which can be used for conducting the air in the desired direction into and out of the unit. Hereby, it becomes possible to secure an efficient exchange of air in the separate rooms, and the indoor units can thus contribute to securing good ventilation through the entire building.

An advantageous configuration of the equipment implies that the flow channels at least in the air supply side, can be configured with narrowing towards the outlet, so that the supply of air takes place over a relatively small area. Thus, it will be possible to practically shoot supply air into the room, and this configuration also secures a certain noise reduction.

In the preferred embodiment, the flow channels are provided with noise-reducing material. Thereby the noise from blowers and flowing air is reduced, and at the same time, the possibility of transfer of sound from one room to another through the ventilation unit is reduced.

According to an advantageous embodiment of the invention, the equipment for ventilation of buildings is characterized in that the heat exchange unit is configured with a heat exchanger part in thin metal plate, which is placed directly in encompassing insulation, which both has the function of retaining the exchanger part and secure insulation. In this manner, good heat exchange is secured in a structure that is easy and inexpensive to manufacture and is very compact.

According to the invention, it is suitable that recesses are formed in the encompassing insulation for retaining the heat exchanger part. Thereby, good retaining of the unit is secured when it is mounted.

It is advantageous if the insulation material is also used for retaining one or more blowers. This is also a way of obtaining cheap structure.

According to a preferred embodiment, the equipment is characterized in that the heat exchanger part is configured by alternately folded plates and flat plates, wherein the folded plates at both ends are equipped with an upward fold of about half of the width and a downward fold of about half of the width, wherein the respectively upward and downward folds are placed diagonally opposite each other. These features also help securing a simple and cheap structure.

In an advantageous embodiment, the insulation is divided into sections, preferably longitudinally, and it can together with the heat exchanger part be taken out of the wall, and the insulation can be separated, so that access is provided to the heat exchanger part for cleaning thereof.

Preferably, the heat exchange unit is placed in an external wall, so that it does not take up space in or outside the house, but when there is a need for increased heat exchange effect, it is possible to make the heat exchange unit longer than the thickness of the wall.

An important feature of the invention is that shields that are arranged at the intake and exhaust sides of the indoor unit and at the exhaust side of the heat exchanger unit can be used for helping to control the air flow both in individual rooms and through the entire building.

The invention will be explained further in the following with reference to the drawing, in which
Fig. 1 shows a system for improving the indoor climate according to the invention,
Fig. 2 shows the system, where air is simultaneously blown in and out through heat exchangers in the external walls,
Fig. 3 shows the system, where there is mainly a flow of air through the building (from north to south),
Fig. 4 shows the indoor unit in use for circulating air in a room,
Fig. 5 shows an example of a heat exchanger for mounting in a wall according to the invention, and
Fig. 6 shows an exchange plate, which is provided with folds,
Fig. 7 shows a flat exchange plate,
Fig. 8 shows the principle of the heat exchanger,
Fig. 9 shows the heat exchange unit with blowers mounted,
Fig. 10 shows an indoor unit according to the invention,
Fig. 11 shows the unit viewed from above
Fig. 12 shows an example of air flow in the unit, and
Fig. 13 shows the unit equipped with noise-insulating material.

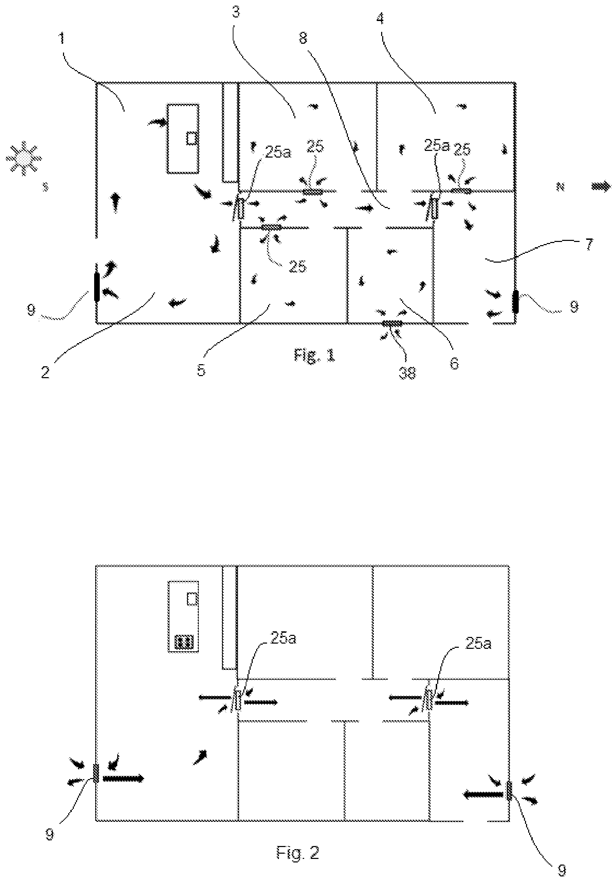

Fig. 1 shows a system according to the invention for improving the indoor climate in a dwelling house, The building shown comprises in the southern part an open-plan kitchen/family room 1, a sitting room 2, two rooms 3 and 4, a bedroom 5, a toilet/bath 6, an entrance/a utility room 7 at the northern part and a corridor 8, which connects the southern and northern parts of the house. The heat exchanger 9, which is placed to the left on the drawing (the southern part of the building) leads the fresh air through open corridors and rooms and out through the heat exchanger 9, which is placed in the northern part of the building, as in this example there is also a ventilator in the form of a solo unit 38 in the bathroom 6, and extraction can take place directly in the open-plan kitchen/family room 1 via a cooker hood. To increase the ventilation effect, separate rooms 3-5 are provided with ventilators in the form of indoor units 25, which can be adjusted according to the current need, and which secure ventilation of all the rooms, in which exchange of air is desired. Furthermore, the indoor units 25 functions so that they contribute to the overall flow of air through the building, and support indoor units 25a, which have the same configuration as the indoor units 25, and which are placed at the end of the corridor 8, have as their primary function to contribute to the air flow through the house. The ventilation can be controlled both manually and automatically. The manual operation can for example be executed via a traditional remote control or an application on a smartphone, if there is a need to change the function. The control can also be automated, so that the ventilation is regulated automatically depending of for example the indoor air temperature, degree of humidity, CO2 content, O2 content, particle content, radon content as well as the content of various organic compounds, such as solvents.

Fig. 2 shows the system, wherein air is simultaneously blown in and out through heat exchangers 9 in the external walls. Here the support indoor units 25a both function for blowing air into and extract air out of the shown corridor 8. The indoor unit 25a with support function is thus the extended arm of the heat exchange units 9 and transfer air inside the building.

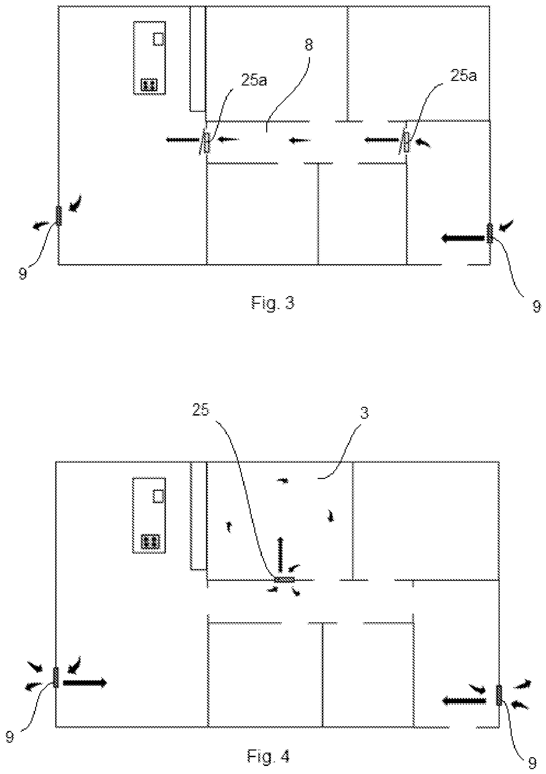

Fig. 3 shows the system, where there is mainly a flow of air through the building (from north to south). Here air passes through the heat exchanger unit 9, which is configured as a wall lead-through. The indoor units 25a with support function here function for passing air through the building. In this way, considerable air passage is obtained, and there is hereby also a possibility of a cooling effect, while the building is cleaned for unwanted substances.

Fig. 4 shows how an indoor unit 25 ventilates a room 3 with the air in the corridor 9, meaning air that the heat exchange units and the indoor units 25a with the support function supply.

According to a preferred embodiment of the invention, a counter-flow heat exchanger, which is embedded in a moulded or adapted insulating material, is used as wall heat exchanger.

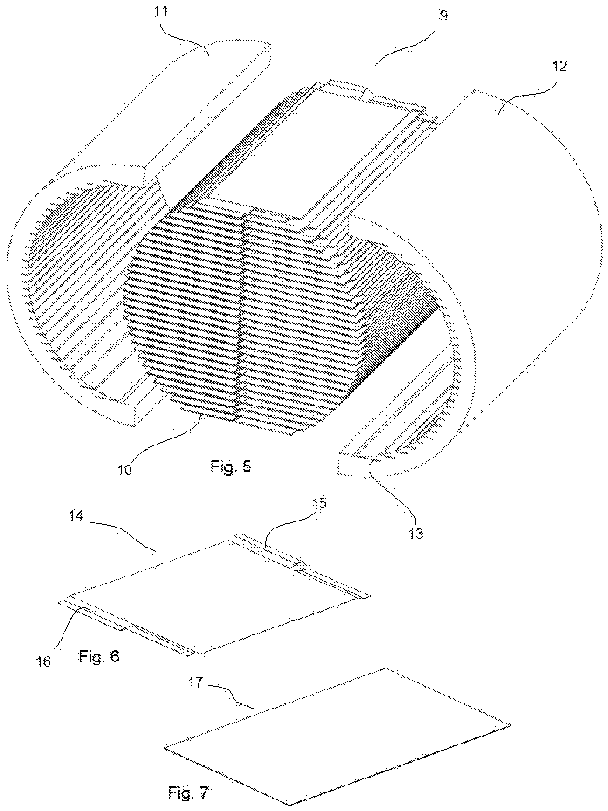

The configuration of such a wall heat exchanger 9 for placement in a wall is shown in Fig. 5. Here a joined heat exchanger part 10 is shown, which is to be encompassed by two parts 11 and 12 of moulded insulating material. The two parts each constitutes a half cylindrical shell, which can be joined mutually to create a pipe-like structure. The reference numeral 13 indicates an example of a number of recesses in the insulating pipe 11, 12, which recesses 13 are used for retaining the heat exchanger part itself. The heat exchanger part consists of stacked exchanger plates 14, 17, and the extracted air is conducted on the one side of an exchanger plate and the intake air on the other side, so that the heat is exchanged through the plates. In the shown embodiment, this is obtained by every other plate 14 being folded, so that upward flaps 15 are formed, extending across about half of the plate 14 width on the one diagonal and downward flaps 16, which also extend across about half of the plate 14 width, on the other diagonal. For practical reasons and as is shown, the fold should preferably be the same at both ends of the plate. The plates are stacked alternately with a folded plate 14 and a flat plate 17, so that in one layer it becomes possible to have diagonal flowing through the exchanger 10, for example from left to right, while the flow in the layer above and below also runs diagonally, but from right to left (Fig. 6). This secures a long way for the air through the heat exchanger, resulting in good heat exchange. In the preferred embodiment, the exchanger plates 14, 17 are glued together, and they are inserted as an aggregate unit 10 in the insulating holding part. In the shown preferred embodiment, a cellular plastic type is used as holding and insulating part 11, 12, such as a relatively hard type of foamed polystyrene, which both has good insulating properties and sufficient strength. The exchanger part 10 and the holding and insulating part 11, 12 can be dimensioned so that the exchanger part 10 is held in place by means of the pressure from the insulating part 11, 12, but in the preferred embodiment, the insulating part 11, 12, as shown in Fig. 5, is provided with grooves 13, which the exchanger part 10 fits into, to secure better retaining.

Here an exchanger part 10 is shown that is substantially circular in cross section. Hereby the maximum heat exchanging effect is obtained relative to the cross-sectional area target, but if the consideration of a simple structure, in which the lamellas have the same surface measure, is of higher importance, the exchanger part can for example be configured with a substantially rectangular cross section. Such a structure can advantageously be used for the exchanger 9.

If a possibility of separating the exchanger and insulation/holding part is desired, the holding part can, as shown in Fig. 5, advantageously be executed in two or more pieces 11 and 12, which are not glued together, but for example are held in place of the internal wall by the hole, in which the unit is to be mounted. Thus, it becomes possible to pull the unit out the wall and subsequently remove the insulation material and clean the lamellas.

Thereby it is also possible to arrange one or more filter units (not shown) in connection with the heat exchanger 9. A filter unit can be arranged on the side of the heat exchanger 9 that faces inwards in the house, if it is desirable to be able to exchange the filters from the inside. A filter unit can be arranged on the side of the heat exchanger 9 that faces outwards in the house (arranged with termination on the external wall of the house) if it is desirable that a service technician should be able to service the heat exchanger without necessarily having access to the inside of the house.

The wall heat exchanger 9 functions in the way that outdoor air, which has possibly been pre-heated by the solar collector and in the first heat exchanger step, but which is still usually colder than the indoor air, is conducted through the external pipe 11, 12 and hereby passes the large number of thin aluminium lamellas 14, 17, whereby the temperature of the supply air approaches the temperature of the exhaust air. On the inner side, the module is provided with a back plate, which is mounted on the wall, for example by being fastened with screws. It is important that the intake air is conducted out into the room in such a way that the fresh air is not immediately mixed with the "dirty" air, which can for example be done by conducting the air out more or less in parallel with the back plate of the module or by injecting the air into the building across a small area and with great force.

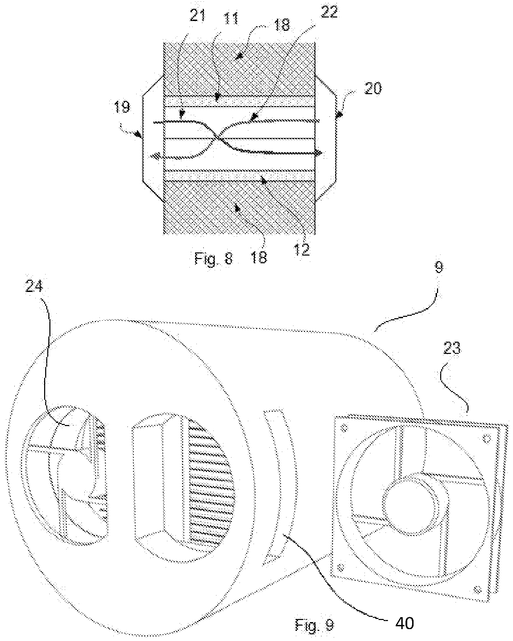

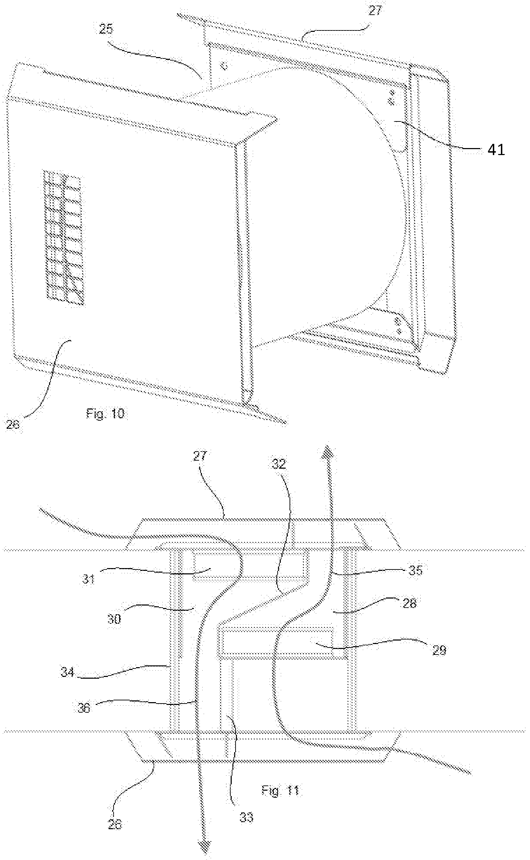

The principle of the heat exchanger is also shown in Fig. 8. The heat exchanger is mounted with the two pipe halves 11, 12 in a wall 18. Reference numeral 19 indicates an internal shield, and an external shield 20 is also possible. The outward air flow 21 moves diagonally through the exchanger unit and releases heat to the incoming air flow 22, which also moves diagonally through the exchanger unit. The internal shield 19 is attached to the back plate. A corresponding back plate 41 is shown in Figs 10 and 11, wherein it forms a kind of flange at the end of an indoor unit 25, wherein an internal or external shield 26, 27 can be attached to the back plate 41. In a corresponding manner, the internal and/or external shield 19, 20 can be attached to a back plate of the heat exchanger 9. The back plate on the heat exchanger 9 can be configured so that filters can be inserted by "pressing" them into a recess or a frame provided for the purpose. If the filters are placed on the inner side, two recesses or frames are advantageous, so that it is possible to have a filter for both supply air and exhaust air. If the filters are placed externally, it is only necessary to have one recess or frame for placing a filter at the supply air, as it is not necessary to filter exhaust air on the outer side.

In connection with the exchangers 9, further units may be provided (not shown) for cooling or heating of the supply air.

Fig. 9 shows an example of a way of mounting blowers 23, 24. The blower 23 can, as shown, easily be mounted in the insulation material by being offset into place in a slot 40 provided for the purpose. The same could be the case for the blower 24. To obtain heat exchange, it is important that intake and extraction take place simultaneously. However, if less heat exchange is desired, intake and extraction can take place differed in time, or the extraction can take place through another venting.

The blowers 23, 24 can be placed close to the exchanger part 10 to provide a compact unit with as large an exchanger area as possible. In one embodiment, the blowers 23, 24 can be placed at a greater distance from the exchanger part 10 or the exchanger plates. The distance can be from about 10 to 150 mm. Hereby, it is obtained that the air is distributed over a larger part of the exchanger area.

In one embodiment, one or more filter units (not shown) can also be placed in a slot (not shown), corresponding to the slot 40, wherein a blower 23, 24 can be placed.

In another embodiment, sensors, measuring units and so on, can be placed in openings, provided in the insulation material 11, 12.

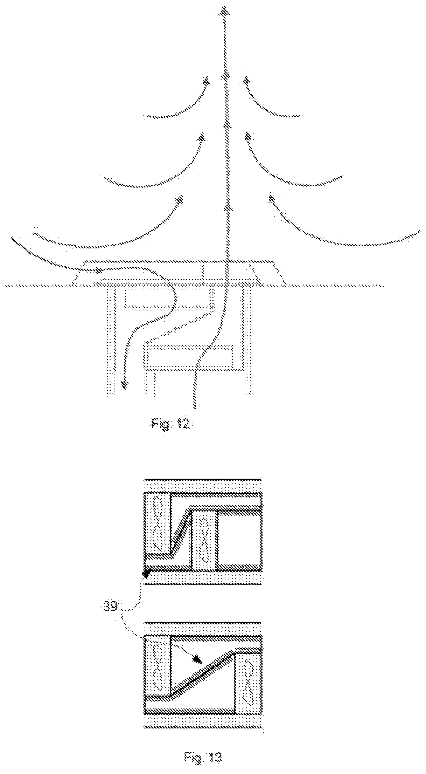

An example of a so-called indoor unit 25 is shown in Figs 10 to 13. In Fig. 10 the indoor unit 25 is shown with an external shield 26, which can also function as a deflector to control the air direction into and out of the unit. Likewise, an internal shield 27 with the same function is arranged. Fig. 11 shows a section through a preferred embodiment for the indoor unit 25. Here the shield 26, covering the outer side of the indoor unit 25, is also shown. The shield 26 functions partly as covering and can partly, as mentioned, be used for conducting both the intake and the extracted air in desired directions, and there is a corresponding shield 27 on the other side of the wall (the inner side). Between the shields, there is an inward flow channel 28, wherein a blower 29 is placed for air supply and an outward flow channel 30, wherein a blower 31 for extraction is arranged. Between the flow channels, there is a partition 32, which in a preferred embodiment is provided with sound-dampening material to reduce the noise from the blowers and the air movement as well as to reduce the transfer of sound between the rooms connected by the indoor unit. The illustrated embodiment of the flow channels 28 and 30 further contribute to reducing the noise and the transfer of sound. Around the blowers and the flow channels, there is a flexible pipe, which functions as the external wall of the unit towards the wall, wherein the unit is arranged. For supporting and retaining the internal parts of the indoor unit, a piece of material 33 is moreover arranged, in this case of polystyrene that is cut into the correct length, so that it fits the wall thickness. The structure is encompassed by a pipe 34 in the wall. The pipe 34 is flexible, so that it can be adjusted to different wall thicknesses. The arrows 35 and 36 indicate the air flow into and out of the double ventilator. The use of indoor units of this type makes it possible to obtain complete ventilation of buildings without pipes, channels or hoses, which reduces the price of the system considerably and makes mounting simpler. Such unit 25 can thus ventilate a room with air from a corridor or another room without doing it with air directly from the outside via an external wall. When the supply and exhaust of the indoor unit can be controlled separately, it can help moving the air through several rooms, to where the doors can be closed, and in both directions depending on whether cooling or heating of the building is desired. This is for example possible by correct configuration of the structure and by controlling the strength of the supply by securing that the supply air is "shot" 2-5 meters into the room to be ventilated, so that it is not mixed with the extracted air, which is shown in Fig. 12.

If a function is desired, wherein the indoor unit 25 contributes to creating flowing through a building, intake and exhaust on the outer side of the room can suitably take place roughly perpendicularly to the overall flow direction through the wall and with intake in the direction from the main unit and extraction in the direction towards the secondary unit.

Support indoor units 25a, which as mentioned for example are arranged at either end of a corridor, are configured as the other indoor units 25, but will most often only function by blowing in one or the other direction, so that the air is transferred through the building. Hereby good air passage is ensured without the use of pipes, even when doors are closed.

An example of use of sound-absorbing materials 39 in the flow channels is shown in Fig. 13. Together with the shown geometric configuration, the use of sound-absorbing materials secures low-noise operation and also secures sound reduction between the rooms connected by the indoor unit.

An indoor unit 25 of the type outlined above is easy to mount, as only one hole in the wall and one wiring are necessary to obtain both air supply and extraction, and it is possible to control the airflows, so that both good ventilation of the room and air movement through the entire building are secured.

An example of the configuration of an application for controlling the equipment for ventilation of buildings will be described in the following.

When the application is opened, you arrive at the front page with an overview of the temperature in degrees Celsius, the air humidity measured in percentages and the CO2 level measured in ppm. From the front page, you can click on respectively COMFORT ZONE, PAUSE, NOBODY HOME and HISTORY.

By clicking on COMFORT ZONE, you are taken to another screen view, which also shows the overview of temperature, air humidity and CO2 level, and there is a slider for the choice of temperature. There is a scale with an interval of 4 degrees, which can be moved in both directions to set the desired comfort zone. When the desired comfort zone has been chosen, you click back to the main menu.

When you click on PAUSE, you will arrive at a screen view, on which, in addition to the overview, there is also a slider for regulating the pause interval from 0 to 2 hours. During a pause, there will only be air circulation in the building. (This is the program that the system changes to if a cooker hood is registered as being switched on).

When from the main menu NOBODY HOME is clicked, you will arrive at a page, where you can set the system in dormant mode, when there are no persons in the building. It is possible to indicate a time interval for each weekday, and it is possible to switch the dormant mode on and off on each day. Moreover, it is possible to turn off dormant mode completely, which for example may be desirable in private residences during holidays, when the residents stay in the home.

When you click on HISTORY from the front page, you arrive at a screen view with a graphical image of the development in temperatures as well as air humidity and CO2 levels relative to the recommendations. The temperature is set by the user, as it is individual, but maximum air humidity of 45% is recommended, and the recommended CO2 level is 550 ppm. It is desirable that it clearly appears when the measuring results are above the recommended levels. On the side, it is possible to change the scaling, for example from hour to day to month, whereby changes in the levels during a calendar day, one month and one year can for example be seen.

### List of reference numerals:

- 1: Open-plan kitchen/family room
- 2: Sitting room
- 3: Room
- 4: Room
- 5: Bedroom
- 6: Toilet/bath
- 7: Entrance/utility room
- 8: Corridor
- 9: Heat exchanger
- 10: Exchanger part
- 11: First pipe half
- 12: Second pipe half
- 13: Holding groove
- 14: Folded plate
- 15: Flap folded upwards
- 16: Flap folded downwards
- 17: Flat plate
- 18: Wall
- 19: Internal shield
- 20: External shield
- 21: Outgoing air flow
- 22: Ingoing air flow
- 23: Right blower
- 24: Left blower
- 25: Indoor unit
- 25a: Support indoor unit
- 26: External shield
- 27: Internal shield
- 28: Ingoing air flow channel
- 29: Ingoing blower
- 30: Outgoing air flow channel
- 31: Outgoing blower
- 32: Partition between channels
- 33: Spacer
- 34: Flexible pipe
- 35: Ingoing air flow
- 36: Outgoing air flow
- 37: Secondary ventilation unit
- 38: Solo unit
- 39: Insulation
- 40: Slot
- 41: Back plate

## Claims

1. A combination of a building and equipment for ventilation of a building, the building comprising at least one room separated by a wall from a corridor or at least two rooms separated by a wall, the equipment for ventilation comprising at least one heat exchange unit (9), configured to exchange energy between intake air into the building and exhaust air from the building, which equipment is configured to be controlled electronically and centrally, the equipment for ventilation further comprising at least one indoor unit (25, 25a), **characterized in that** said at least one indoor unit (25, 25a) is configured to be arranged in said wall separating a room from a corridor or at least two rooms (1, 2, 3, 4, 5, 6, 7, 8) and comprising a first flow channel (28) with a blower (29) and an adjacent second flow channel (30) with a blower (31), which two blowers can be controlled separately, which first and second flow channel (28, 30) is separated from each other by a partition (32), said indoor unit (25, 25a) being configured for blowing air simultaneously through said flow channels (28, 30) in opposite directions by said blowers (29, 31).

2. The combination of a building and equipment for ventilation of a building according to claim 1, **characterized in** said equipment for ventilation being configured for said heat exchange to occur simultaneously with said blowing.

3. The combination of a building and equipment for ventilation of a building according to claim 1 or 2, **characterized in that** the indoor unit (25) is provided with an external and internal shield (26, 27) configured for respectively covering the outer and inner side of the indoor unit, and for controlling the air direction into and out of the unit as deflectors.

4. The combination of a building and equipment for ventilation of a building according to any one of claims 1 to 3, **characterized in that** the flow channels (28, 30) are configured with narrowing towards the outlet.

5. The combination of a building and equipment for ventilation of a building according to any one of claims 1 to 4, **characterized in that** the flow channels (28, 30) are provided with noise-reducing material.

6. The combination of a building and equipment for ventilation of a building according to claim 1, **characterized in that** the at least one heat exchange unit (9) is configured with a heat exchanger part (10) in a heat-conductive material, such as thin metal plate (14, 17), which is arranged directly in recesses (13) provided in the encompassing insulation (11, 12) for retaining the heat exchanger part (10) in the encompassing insulation (11, 12), which insulation both functions to retain the exchanger part and to secure insulation.

7. The combination of a building and equipment for ventilation of a building according to claim 6, **characterized in that** a slot (40) is provided in the insulation material for retaining one or more blowers (23, 24) of the at least one heat exchange unit (9).

8. The combination of a building and equipment for ventilation of a building according to claim 6 or 7 **characterized in that** the heat exchanger part is configured by alternately folded plates (14) and flat plates (17), wherein the folded plates at both ends are equipped with an upward fold (15) of about half of the width and a downward fold (16) of about half of the width, wherein the respectively upward and downward folds are arranged diagonally opposite each other.

9. The combination of a building and equipment for ventilation of a building according to any one of claims 6 to 8, **characterized in that** the insulation (11, 12) is divided into sections, preferably longitudinally, and together with the heat exchanger part, it can be taken out, and the insulation (11, 12) can be separated, so that access is provided to the heat exchanger part (10) for cleaning thereof.

10. The combination of a building and equipment for ventilation of a building according to any one of claims 6 to 9, **characterized in that** the at least one heat exchange unit (9) is placed in an external wall of the building.

11. The combination of a building and equipment for ventilation of a building according to any one of claims 6 to 10, **characterized in that** the at least one heat exchange unit (9) is longer than a wall thickness.

12. The combination of a building and equipment for ventilation of a building according to any of the preceding claims, **characterized in that** the at least one indoor unit (25, 25a) and the at least one heat exchange unit (9) respectively comprise an internal and external shield (19, 20, 26, 27) configured for controlling the air direction into and out of the respective units, and wherein shields that are located at the intake and exhaust sides of the indoor unit and at the exhaust side of the heat exchanger units are configured to be used for helping to control the air flow in individual rooms and through the entire building.

13. The combination of a building and equipment for ventilation of a building according to any of the preceding claims, **characterized in that** said equipment for ventilation comprises at least two heat exchange units (9).

## Patentansprüche

1. Kombination aus einem Gebäude und einer Ausrüstung zur Belüftung eines Gebäudes, wobei das Gebäude mindestens einen Raum, der durch eine Wand von einem Gang getrennt ist, oder mindestens zwei Räume, die durch eine Wand voneinander getrennt sind, umfasst, wobei die Ausrüstung zur Belüftung mindestens eine Wärmeaustauscheinheit (9) umfasst, die dazu konfiguriert ist, Energie zwischen einer Zuluft in das Gebäude und einer Abluft aus dem Gebäude auszutauschen, wobei die Ausrüstung dazu konfiguriert ist, elektronisch und zentral gesteuert zu werden, wobei die Ausrüstung zur Belüftung ferner mindestens eine Inneneinheit (25, 25a) umfasst, **dadurch gekennzeichnet, dass** die mindestens eine Inneneinheit (25, 25a) dazu konfiguriert ist, in der Wand, die einen Raum von einem Gang oder mindestens zwei Räume (1, 2, 3, 4, 5, 6, 7, 8) voneinander trennt, angeordnet zu sein, und einen ersten Strömungskanal (28) mit einem Gebläse (29) und einen benachbarten zweiten Strömungskanal (30) mit einem Gebläse (31) umfasst, wobei die zwei Gebläse getrennt voneinander gesteuert werden können, wobei der erste und der zweite Strömungskanal (28, 30) voneinander durch eine Abtrennung (32) getrennt sind, wobei die Inneneinheit (25, 25a) dazu konfiguriert ist, durch die Gebläse (29, 31) Luft gleichzeitig in entgegengesetzte Richtungen durch die Strömungskanäle (28, 30) zu blasen.

2. Kombination aus einem Gebäude und einer Ausrüstung zur Belüftung eines Gebäudes nach Anspruch 1, **dadurch gekennzeichnet, dass** die Ausrüstung zur Belüftung derart konfiguriert ist, dass der Wärmeaustausch gleichzeitig mit dem Blasen erfolgt.

3. Kombination aus einem Gebäude und einer Ausrüstung zur Belüftung eines Gebäudes nach Anspruch 1 oder 2, **dadurch gekennzeichnet, dass** die Inneneinheit (25) mit einer äußeren und einer inneren Blende (26, 27) bereitgestellt ist, die dazu konfiguriert sind, die äußere bzw. die innere Seite der Inneneinheit abzudecken und die Luftrichtung in die und aus der Einheit als Deflektoren zu steuern.

4. Kombination aus einem Gebäude und einer Ausrüstung zur Belüftung eines Gebäudes nach einem der Ansprüche 1 bis 3, **dadurch gekennzeichnet, dass** die Strömungskanäle (28, 30) mit einer Verengung zum Auslass hin konfiguriert sind.

5. Kombination aus einem Gebäude und einer Ausrüstung zur Belüftung eines Gebäudes nach einem der Ansprüche 1 bis 4, **dadurch gekennzeichnet, dass** die Strömungskanäle (28, 30) mit geräuschdämmendem Material bereitgestellt sind.

6. Kombination aus einem Gebäude und einer Ausrüstung zur Belüftung eines Gebäudes nach Anspruch 1, **dadurch gekennzeichnet, dass** die mindestens eine Wärmeaustauscheinheit (9) mit einem Wärmetauscherteil (10) aus wärmeleitendem Material, wie beispielsweise dünnen Metallplatten (14, 17), konfiguriert ist, der unmittelbar in Nischen (13), die in einer umgebenden Isolierung (11, 12) bereitgestellt sind, angeordnet ist, um den Wärmetauscherteil (10) in der umgebenden Isolierung (11, 12) zu befestigen, wobei die Isolierung dazu dient, sowohl den Tauscherteil zu befestigen als auch die Isolierung zu sichern.

7. Kombination aus einem Gebäude und einer Ausrüstung zur Belüftung eines Gebäudes nach Anspruch 6, **dadurch gekennzeichnet, dass** ein Schlitz (40) in dem Isoliermaterial bereitgestellt ist, um ein oder mehrere Gebläse (23, 24) der mindestens einen Wärmeaustauscheinheit (9) zu befestigen.

8. Kombination aus einem Gebäude und einer Ausrüstung zur Belüftung eines Gebäudes nach Anspruch 6 oder 7, **dadurch gekennzeichnet, dass** der Wärmetauscherteil aus abwechselnd gefalteten Platten (14) und flachen Platten (17) konfiguriert ist, wobei die gefalteten Platten an beiden Enden mit einer Aufwärtsfalte (15) von etwa der halben Breite und einer Abwärtsfalte (16) von etwa der halben Breite ausgestattet sind, wobei die Aufwärts- und Abwärtsfalten jeweils diagonal einander gegenüberliegend angeordnet sind.

9. Kombination aus einem Gebäude und einer Ausrüstung zur Belüftung eines Gebäudes nach einem der Ansprüche 6 bis 8, **dadurch gekennzeichnet, dass** die Isolierung (11, 12) in Abschnitte, vorzugsweise in Längsrichtung, unterteilt ist und zusammen mit dem Wärmetauscherteil herausgenommen werden kann und die Isolierung (11, 12) getrennt werden kann, so dass ein Zugang zu dem Wärmetauscherteil (10) zu dessen Reinigung bereitgestellt ist.

10. Kombination aus einem Gebäude und einer Ausrüstung zur Belüftung eines Gebäudes nach einem der Ansprüche 6 bis 9, **dadurch gekennzeichnet, dass** die mindestens eine Wärmeaustauscheinheit (9) in einer Außenwand des Gebäudes platziert ist.

11. Kombination aus einem Gebäude und einer Ausrüstung zur Belüftung eines Gebäudes nach einem der Ansprüche 6 bis 10, **dadurch gekennzeichnet, dass** die mindestens eine Wärmeaustauscheinheit (9) länger ist als eine Wandstärke.

12. Kombination aus einem Gebäude und einer Ausrüstung zur Belüftung eines Gebäudes nach einem der vorhergehenden Ansprüche, **dadurch gekennzeichnet, dass** die mindestens eine Inneneinheit (25, 25a) und die mindestens eine Wärmeaustauscheinheit (9) jeweils eine innere und eine äußere Blende (19, 20, 26, 27) umfassen, die dazu konfiguriert sind, die Luftrichtung in die und aus den jeweiligen Einheiten zu steuern, und wobei Blenden, die auf der Einlassseite und der Auslassseite der Inneneinheit und auf der Auslassseite der Wärmeaustauscheinheiten gelegen sind, dazu konfiguriert sind, verwendet zu werden, um Steuern des Luftstroms in einzelnen Räumen und durch das gesamte Gebäude zu unterstützen.

13. Kombination aus einem Gebäude und einer Ausrüstung zur Belüftung eines Gebäudes nach einem der vorhergehenden Ansprüche, **dadurch gekennzeichnet, dass** die Ausrüstung zur Belüftung mindestens zwei Wärmeaustauscheinheiten (9) umfasst.

## Revendications

1. Combinaison d'un bâtiment et d'un équipement de ventilation d'un bâtiment, le bâtiment comprenant au moins une pièce séparée par un mur d'un couloir ou au moins deux pièces séparées par un mur, l'équipement de ventilation comprenant au moins une unité d'échange de chaleur (9), conçue pour échanger de l'énergie entre l'air d'admission dans le bâtiment et l'air d'évacuation du bâtiment, l'équipement étant conçu pour être commandé électroniquement et centralement, l'équipement de ventilation comprenant en outre au moins une unité intérieure (25, 25a), **caractérisée en ce que** ladite au moins une unité intérieure (25, 25a) est conçue pour être agencée dans ledit mur séparant une pièce d'un couloir ou au moins deux pièces (1, 2, 3, 4, 5, 6, 7, 8) et comprenant un premier canal d'écoulement (28) doté d'une soufflante (29) et un second canal d'écoulement (30) adjacent doté d'une soufflante (31), ces deux soufflantes pouvant être commandées séparément, les premier et second canaux d'écoulement (28, 30) étant séparés l'un de l'autre par une cloison (32), ladite unité intérieure (25, 25a) étant conçue pour souffler de l'air simultanément à travers lesdits canaux d'écoulement (28, 30) dans des directions opposées par lesdites soufflantes (29, 31).

2. Combinaison d'un bâtiment et d'un équipement de ventilation d'un bâtiment selon la revendication 1, **caractérisée en ce que** ledit équipement de ventilation est conçu pour que ledit échange de chaleur se produise simultanément avec ledit soufflage.

3. Combinaison d'un bâtiment et d'un équipement de ventilation d'un bâtiment selon la revendication 1 ou 2, **caractérisée en ce que** l'unité intérieure (25) est dotée de gaines externe et interne (26, 27) conçues pour recouvrir respectivement le côté externe et interne de l'unité intérieure et pour commander la direction de l'air entrant et sortant de l'unité en tant que déflecteurs.

4. Combinaison d'un bâtiment et d'un équipement de ventilation d'un bâtiment selon l'une quelconque des revendications 1 à 3, **caractérisée en ce que** les canaux d'écoulement (28, 30) sont conçus avec un rétrécissement vers la sortie.

5. Combinaison d'un bâtiment et d'un équipement de ventilation d'un bâtiment selon l'une quelconque des revendications 1 à 4, **caractérisée en ce que** les canaux d'écoulement (28, 30) sont dotés d'un matériau insonorisant.

6. Combinaison d'un bâtiment et d'un équipement de ventilation d'un bâtiment selon la revendication 1, **caractérisée en ce que** l'au moins une unité d'échange de chaleur (9) est conçue avec une partie échangeur de chaleur (10) en un matériau conducteur de chaleur, tel qu'une fine plaque métallique (14, 17), qui est agencée directement dans des évidements (13) prévus dans l'isolation enveloppante (11, 12) pour retenir la partie échangeur de chaleur (10) dans l'isolation enveloppante (11, 12), l'isolation fonctionnant à la fois pour retenir la partie échangeur et sécuriser l'isolation.

7. Combinaison d'un bâtiment et d'un équipement de ventilation d'un bâtiment selon la revendication 6, **caractérisée en ce qu'une** fente (40) est prévue dans le matériau d'isolation pour retenir une ou plusieurs soufflantes (23, 24) de l'au moins une unité d'échange de chaleur (9).

8. Combinaison d'un bâtiment et d'un équipement de ventilation d'un bâtiment selon la revendication 6 ou 7, **caractérisée en ce que** la partie échangeur de chaleur est conçue avec des plaques pliées (14) et des plaques plates (17) en alternance, dans laquelle les plaques pliées au niveau des deux extrémités sont équipées d'un pli vers le haut (15) d'environ la moitié de la largeur et d'un pli vers le bas (16) d'environ la moitié de la largeur, dans laquelle les plis respectivement vers le haut et vers le bas sont agencés en diagonale l'un en face de l'autre.

9. Combinaison d'un bâtiment et d'un équipement de ventilation d'un bâtiment selon l'une quelconque des revendications 6 à 8, **caractérisée en ce que** l'isolation (11, 12) est divisée en sections, de préférence longitudinalement, et peut être retirée, en même temps que la partie échangeur de chaleur, et l'isolation (11, 12) peut être séparée, de sorte qu'un accès à la partie échangeur de chaleur (10) soit fournie pour son nettoyage.

10. Combinaison d'un bâtiment et d'un équipement de ventilation d'un bâtiment selon l'une quelconque des revendications 6 à 9, **caractérisée en ce que** l'au moins une unité d'échange de chaleur (9) est placée dans un mur externe du bâtiment.

11. Combinaison d'un bâtiment et d'un équipement de ventilation d'un bâtiment selon l'une quelconque des revendications 6 à 10, **caractérisée en ce que** l'au moins une unité d'échange de chaleur (9) est plus longue qu'une épaisseur de mur.

12. Combinaison d'un bâtiment et d'un équipement de ventilation d'un bâtiment selon l'une quelconque des revendications précédentes, **caractérisée en ce que** l'au moins une unité intérieure (25, 25a) et l'au moins une unité d'échange de chaleur (9) comprennent respectivement des gaines interne et externe (19, 20, 26, 27) conçues pour commander la direction de l'air entrant et sortant des unités respectives, et dans laquelle des gaines qui sont situées au niveau des côtés d'admission et d'évacuation de l'unité intérieure et au niveau du côté d'évacuation des unités d'échange de chaleur sont conçues pour être utilisées afin d'aider à commander l'écoulement d'air dans des pièces individuelles et à travers l'ensemble du bâtiment.

13. Combinaison d'un bâtiment et d'un équipement de ventilation d'un bâtiment selon l'une quelconque des revendications précédentes, **caractérisée en ce que** ledit équipement de ventilation comprend au moins deux unités d'échange de chaleur (9).
